Europäisches Patentamt

(19) European Patent Office

Office européen des brevets

(11) Publication number: **0 080 803**

**A2**

(12) # EUROPEAN PATENT APPLICATION

(21) Application number: **82305507.4**

(22) Date of filing: **15.10.82**

(51) Int. Cl.³: **B 23 K 9/28**

(30) Priority: **30.11.81 PC T/US81/01605**

(43) Date of publication of application:
**08.06.83 Bulletin 83/23**

(84) Designated Contracting States:
**BE DE FR GB NL SE**

(71) Applicant: **TOWMOTOR CORPORATION**
**7800 Tyler Boulevard**
**Mentor, OH 44060(US)**

(71) Applicant: **Dietrick, Earl Thomas**
**325 East 250 Street**
**Euclid Ohio 44132(US)**

(72) Inventor: **Dietrick, Earl Thomas**
**325 East 250 Street**
**Euclid Ohio 44132(US)**

(72) Inventor: **Prayner, Timothy F.**
**8238 Broadmoor**
**Mentor Ohio 44060(US)**

(74) Representative: **Brunner, Michael John et al,**
**Gill Jennings & Every 53/64 Chancery Lane**
**London WC2A 1HN(GB)**

(54) **Contact tip for a welding head.**

(57) A contact tip (10) for a welding head (12) includes a wear-resistant member (34) and one or more transverse passageways (32).

Wear-inducing deposits on the surface of consumable electrodes which would result in shortened service life of contact tips, and other surface contaminants are removed from the electrode (28) by a hard, wear-resistant member (34) and directed radially outwardly to the external surface (16) through the or each transverse passageway (32).

FIG-3

- 1 -      Ref. 90/2039/02

TOWMOTOR CORPORATION and DIETRICK, EARL THOMAS.

CONTACT TIP FOR A WELDING HEAD

This invention relates generally to a contact tip for a welding head and more particularly to a contact tip having a wear-resistant insert.

The contact tip of a welding head used in conjunction with consumable electrodes generally provides the dual functions of conducting electrical current to the electrode and guiding the electrode to the workpiece.  As a result of desirable electrical conductivity characteristics, copper has been universally designated as the preferred material for contact tips.  Copper, however, is a relatively soft metal and the internal passageway of the contact tip is easily abraded by movement of the electrode through the tip.  Consumable electrodes, usually in continuous wire form, are typically treated by the manufacturer  with a protective coating to prevent oxidation and deterioration of the electrode during shipping and storage.  Additionally, the surface of the electrode wire may become contaminated with dust or other deleterious matter during shipping and storage.  Such contaminants on the electrode surface add to the internal passageway wear problem.  A passageway enlarged by wear reduces the effectiveness of the contact tip in guiding the electrode and in transferring electrical current to the electrode.

- 2 -

In manual welding operations, a welder is able to compensate physically for electrode displacement and a limited amount of tip wear can therefore be accepted. However, in automatic or robot-controlled welding operations, the position of the welding head is predetermined and the workpiece-contacting end of the electrode must remain in a fixed, spaced relationship with the workpiece.

One attempt to solve the contact tip wear problem is taught in US-A-2,289,938. This specification shows a hardened steel, wear-resistant insert placed within the contact tip assembly. However, it has been found that the protective coating applied to the electrodes during manufacture is removed from the electrode surface by hard wear-resistant materials and becomes compacted in and clogs the tip passageway, prohibiting uniform feeding of the electrode to the workpiece and necessitating a waste of time in cleaning the contact tip or causing it to be discarded.

According to the present invention a contact tip for a welding head comprises a body and a wear-resistant member positioned within the body, a longitudinal passageway passing through the body and wear-resistant member for guiding a wire electrode, characterized in that at least one transverse passageway through the body connects the longitudinal passageway with the external surface of the body, the transverse passage being positioned adjacent the wear-resistant member. The transverse passageway connects the longitudinal passageway to the outer surface of the body.

Preferably, the wear-resistant member is positioned adjacent one end of the body and the transverse passageway is axially positioned between the wear-resistant member and the other end of the body.

The present invention solves the above problems by providing a contact tip that is both self-cleaning and resistant to wear.

One example of a contact tip for a welding head, constructed in accordance with the invention will now be described with reference to the accompanying drawings in which:-

Figure 1 is a sectional view of a welding head and contact tip;

Figure 2 is an isometric view of the contact tip;

and,

Figure 3 is a sectional view taken along the lines III-III of Figure 2.

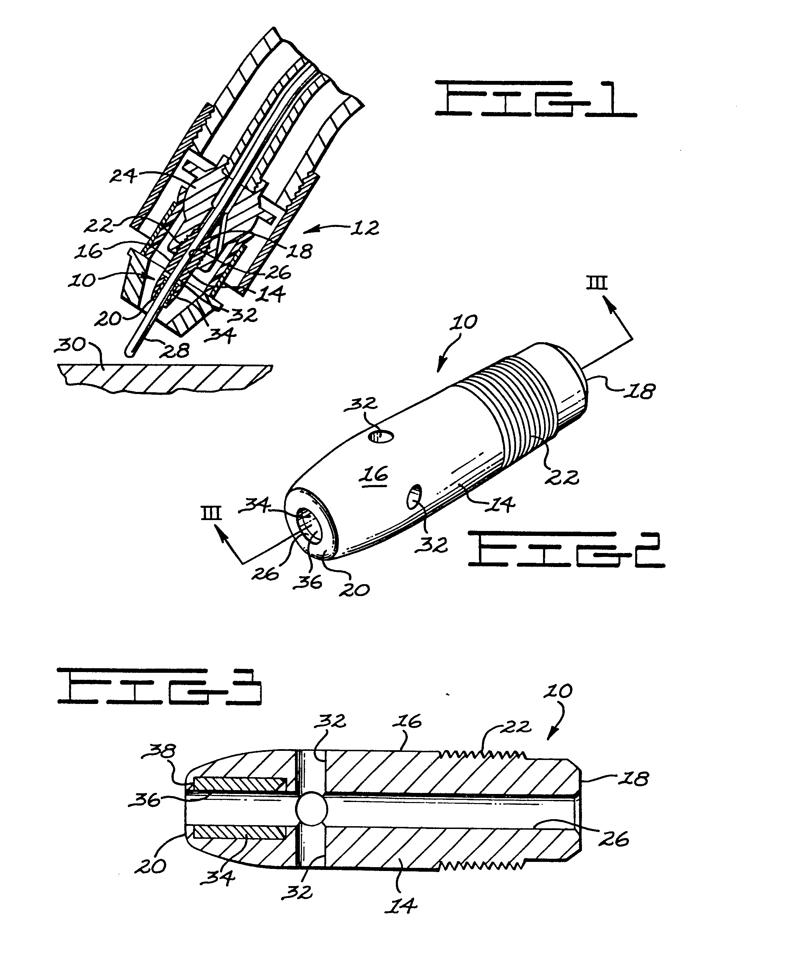

In the preferred embodiment of the invention, a contact tip 10 is shown in Figure 1 in conjunction with a conventional welding torch or head 12. The contact tip 10, as shown in greater detail in Figs. 2 and 3, includes a body 14 having a generally cylindrical external surface 16. The body 14 is formed of a first material, preferably copper, and includes an electrode receiving end 18 and an electrode discharge end 20 spaced from the receiving end 18. A plurality of screw threads 22 are formed on the external surface 16 near the receiving end 18. .The screw threads 22 secure the contact tip 10 to the welding head 12 by engagement with mating threads formed in a tip holder assembly 24 of the welding head 12.

The body 14 also includes a centrally disposed longitudinal passageway 26 extending through the body 14 from the electrode receiving end 18 to the electrode discharge end 20.

As best shown in Fig. 1, the walls of the longitudinal passageway serve to physically contact and direct a continuous wire electrode 28 passing through the contact tip 10 to a workpiece 30.

The body 14 further includes at least one transverse passageway 32 communicating the longitudinal passageway 26 with the external surface 16. In the preferred embodiment, the longitudinal passageway 32 is formed by cross-drilling two intersecting holes through the body 14 at right angles with respect other, thereby forming four transverse passageways 32 extending between the longitudinal passageway 26 and the external surface 16.

The contact tip 10 further includes an annular wear-resistant member 34 having an inner passageway 36 aligned with the longitudinal passageway 26. The wear-resistant member 34 is positioned within the body 14 at a position substantially adjacent the electrode discharge end 20 of the body 14. The wear-resistant member 34 is formed of a different second material such as tool steel, metallic carbide alloys, or a ceramic composition. In the preferred embodiment, the wear-resistant member 34 is formed of air hardened tool steel, and the electrode discharge end 20 of the body 14 is peened over an end 38 of the wear-resistant member 34 to positively position the member 34 and protect the member 34 from weld spatter during operation.

In the embodiment, the transverse passageway 32 is axially spaced less than 0.25 in. (6.3 mm) from the wear-resistant member 34.

In one example, a contact tip 10 was constructed according to the present invention and used in conjunction with a consumable wire electrode having a nominal diameter of .094 in. (2.4mm). The coaxially aligned longitudinal passageway 26 and the inner passageway 26 were equally sized to .102 in. (2.6 mm) dia. Four transverse passageways were formed to a diameter of .063 in. (1.6 mm) and were axially spaced 0.02 in. (0.5 mm) from the wear-resistant member 34.

The contact tip 10 of the present invention is particularly useful in a welding head adapted for automatic or high duty-cycle welding operations in which the tip wear problem is especially severe. In one example, the welding of a large fabricated assembly is carried out by a robot-controlled welding head feeding a .094 in. (2.4 mm) gas-shielded, flux-cored wire at a rate of 205 in./min. (86.8 mm/sec). Each assembly requires approximately 25 lbs (11 kg) of welding wire and a new contact tip of conventional construction is required after each 1.5 assemblies. It was found that in this particular operation, a conventional solid copper contact tip became worn and could not provide satisfactory directional control to the wire after feeding about 40 lbs. (18 kg) of the wire through the tip.

After changing the conventional contact tip on the weld head 12 of the robot-controlled welder to the contact tip 10 of the present invention, a total of 47 assemblies, consuming approximately 1200 lbs. (540 kg) of wire, were welded before the contact tip 10 became worn and required replacement. Thus, the contact tip 10 of the present invention demonstrated a 35-fold increase in wear life over a conventional contact tip.

Further, during operation of the weld head 12 having the contact tip 10 of the present invention, it was observed that the protective coating material on the electrode 28 was effectively stripped from the electrode surface by the hard, wear-resistant member 34 prior to passage of the electrode 28 through the inner passageway 36 of the wear-resistant member 34. The material removed from the electrode surface was then urged radially outwardly through the transverse passageways 32 to the external surface 16 and away from the longitudinal passageway 26. By providing a transverse passageway 32 for the removal of dirt, protective coatings and other wear-inducing matter from the surface of the electrode 28 prior to passage of the electrode 28 through the wear-resistant member 34, the service life of the wear-resistant member 34 was greatly increased. Further, removal of the surface materials from the longitudinal passageway effectively solved the internal clogging problem long experienced with contact tips constructed of relatively hard materials.

The contact tip of the invention is also useful in manually operated welding heads.

- 8 -

CLAIMS

1. A contact tip (10) for a welding head (12), the tip (10) comprising a body (14) and a wear-resistant member (34) positioned within the body, a longitudinal passageway (16) passing through the body (14) and wear-resistant member (34) for guiding a wire electrode, characterized in that at least one transverse passageway (32) through the body connects the longitudinal passageway (26) with the external surface (16) of the body, the transverse passage being positioned adjacent the wear-resistant member.

2. A contact tip (10) according to claim 1, wherein the wear-resistant member (34) is positioned adjacent one end (20) of the body and the transverse passageway (32) is axially positioned between the wear-resistant member (34) and the other end (18) of the body.

3. A contact tip (10) according to claim 1 or claim 2, wherein the end (20) of the body (14) covers an end (38) of the wear-resistant member (34).

4. A contact tip (10) according to any of claims 1 to 3, wherein the transverse passageway (32) is axially spaced less than 0.25 inch (6.3 mm) from the wear-resistant member (34).

5. A contact tip (10) according to any of claims 1 to 4, wherein the body (14) includes a plurality of transverse passageways (32) each connecting the longitudinal passageway (26) with the external surface (16).

6.    A contact tip (10) according to any of claims 1 to 5, wherein the body is formed of copper.

7.    A contact tip (10) according to any of claims 1 to 6, wherein the wear-resistant member (34) is formed from steel or metallic carbide alloys, or ceramic compositions.

FIG-1

FIG-2

FIG-3